# EUROPEAN PATENT APPLICATION

(11) **EP 4 518 447 A1**
(43) Date of publication of application: **05.03.2025**
(21) Application number: 23795311.2
(22) Date of filing: 24.04.2023
(51) Int. Cl.: H04W 52/02

(54) **DEVICE WAKEUP METHOD AND APPARATUS**

(30) Priority: 28.04.2022 CN 202210470761
(71) Applicant: Huawei Technologies Co., Ltd., Shenzhen, Guangdong 518129 (CN)
(72) Inventor: WEI, Dongdong, Shenzhen, Guangdong 518129 (CN); LYU, Yongxia, Shenzhen, Guangdong 518129 (CN); WANG, Ting, Shenzhen, Guangdong 518129 (CN); MA, Jianglei, Shenzhen, Guangdong 518129 (CN); ZHU, Peiying, Shenzhen, Guangdong 518129 (CN)
(74) Representative: Grünecker Patent- und Rechtsanwälte PartG mbB
(86) International application number: PCT/CN2023/090202
(87) International publication number: WO 2023/207878

(57) **Abstract**

This application provides a method for waking up a device, and an apparatus. The method includes: A terminal device sends a first message to a network device, where the first message is associated with a service of the terminal device, and the first message is for waking up the network device. The terminal device establishes a connection to the network device. According to the method provided in this application, the service of the terminal device is associated with the first message for waking up the network device, so that the network device wakes up a device based on the first message associated with the service. Different services may correspond to different wakeup procedures, so that user service experience can be better improved, and energy consumption of a base station can be reduced.

## Description

### CROSS-REFERENCE TO RELATED APPLICATIONS

This application claims priority to Chinese Patent Application No. 202210470761.8, filed with the China National Intellectual Property Administration on April 28, 2022 and entitled "METHOD FOR WAKING UP DEVICE, AND APPARATUS", which is incorporated herein by reference in its entirety.

### TECHNICAL FIELD

This application relates to the field of communication technologies, and in particular, to a method for waking up a device, and an apparatus.

### BACKGROUND

As requirements for data traffic continuously surge, network load increases sharply, and a problem of power consumption of base stations is becoming increasingly serious. Different vendors and operators all use various energy saving means. A general technology system of current energy saving includes energy saving at a device level, a site level, and a network level. At the device level, research on a hardware energy saving solution is conducted mainly from a perspective of component and hardware design. At the site level, research on a software energy saving solution is conducted mainly from aspects of symbol power saving, channel shutdown, carrier shutdown, and deep dormancy. For energy saving at the network level, research on an intelligent energy saving solution is conducted from a perspective of multi-network coordination.

In addition, to reduce network energy consumption, a base station energy saving technology is introduced to both a long term evolution (long term evolution, LTE) system and a new radio (new radio, NR) system. For a base station in a normal operating state, when there is no user in a connected state or there is a very small quantity of users in coverage of the base station, the base station may perform a shutdown operation, in other words, the base station is in an energy saving mode, to reduce energy consumption.

Currently, when in an energy saving mode, a base station can be woken up only in a timing manner or by using a neighboring cell, where flexibility is low.

### SUMMARY

This application provides a method for waking up a device, and an apparatus, to implement a flexible base station wakeup mechanism and improve user experience.

According to a first aspect, this application provides a method for waking up a device. The method may be applied to a terminal device side. A specific execution body of the method is not limited in this embodiment of this application. An example in which the method is applied to a terminal device is used. In the method, a terminal device sends a first message to a network device, where the first message is associated with a service of the terminal device, and the first message is for waking up the network device; and the terminal device establishes a connection to the network device.

According to the method provided in this application, the service of the terminal device is associated with the first message for waking up the network device. For example, different types of services are associated with different first messages. When the network device is in a sleep state, or downlink of the network device is disabled, after receiving the first message, the network device may wake up a device based on the first message associated with the service. Different services may correspond to different wakeup procedures, so that flexibility and a startup speed of the network device is increased, user service experience is improved, and energy consumption of a base station is reduced. For example, different wakeup procedures correspond to different startup speeds or transmission bandwidths.

In a possible implementation, the first message has an association relationship with at least one of the following information of the terminal service: a service type, service quality of service, a service quality of service identifier, a service delay, a service rate, a service packet error rate, and service coverage.

Based on the foregoing method, the network device may determine, based on the first message, at least one of the service type, the service quality of service identifier, the service delay, the service rate, the service packet error rate, and the service coverage of the service associated with the network device. Therefore, the network device can obtain a service type and a service appeal of the terminal device in a timely manner, to improve flexibility of a network.

In a possible implementation, the first message is associated with N service quality of service identifiers, the service quality of service identifier of the service is one of the N service quality of service identifiers, and N is an integer greater than 0.

By implementing the foregoing method, the first message is associated with the N service quality of service identifiers, so that one or more service quality of service identifiers may be configured based on an actual situation, and implementation is more flexible.

In a possible implementation, the first message is associated with a service quality of service identifier range, and the service quality of service identifier of the service is in the service quality of service identifier range.

By implementing the foregoing method, in a manner of dividing the service quality of service identifier range, only a threshold of each service quality of service identifier range associated with the first message needs to be notified. This helps reduce signaling.

In a possible implementation, the first message is associated with M service types, the service type of the service is one of the M service types, and M is an integer greater than 0.

By implementing the foregoing method, the first message is associated with the service type. An association granularity is coarse, and this is more helpful to reduce notification signaling.

In a possible implementation, an association relationship between the first message and the service of the terminal device is preset.

By implementing the foregoing method, the association relationship is configured in a preset manner, so that notification overheads can be reduced.

In a possible implementation, an association relationship between the first message and the service of the terminal device is configured by the network device.

In a possible implementation, the terminal device receives a system message or a radio resource control message from the network device, where the system message or the radio resource control message includes the association relationship.

The association relationship is configured in different manners, and is applicable to terminal devices in different states. For example, when the terminal device is in a connected state, the association relationship may be configured by using radio resource control RRC signaling. When the terminal device is in an idle state, the association relationship may be configured by using the system message.

In a possible implementation, the first message is a wakeup message.

In a possible implementation, the first message is a message 1 or a message A in a random access procedure.

The message 1 or the message A in the random access procedure is used as the first message, so that the network device can be woken up and the network device can be accessed by using one message, to increase a speed of accessing the network device by the terminal device.

In a possible implementation, the method further includes: The terminal device sends capability information to the network device, where the capability information indicates that the terminal device has a capability of sending a message that has an association relationship with the service of the terminal device and that is for waking up the network device.

In a possible implementation, the method further includes: The terminal device receives a second message from the network device, where the second message is for triggering the terminal device to report assistance information, and the assistance information includes at least one of the following information: a service data amount that the terminal device expects to report, a sending interval of a service data packet that the terminal device expects to report, a size of a service data packet that the terminal device expects to report, and time of arrival of a service data packet that the terminal device expects to report.

Based on the foregoing method, when performing energy saving shutdown processing, the network device may obtain service expectation of the terminal device in advance, and enter a corresponding sleep mode.

In a possible implementation, the second message is a paging message; or the second message is a short message; or the second message is a system message; or the second message is a radio resource control message.

In a possible implementation, the service of the terminal device has an association relationship with at least one of the following information of the first message: a time domain resource, a frequency domain resource, a codeword, an orthogonal sequence, a sequence length, a sequence format, transmit power, and a power coefficient.

Based on the foregoing method, different first messages associated with different services may have different time domain resources, frequency domain resources, and the like, so that the first messages can be distinguished in different dimensions.

According to a second aspect, this application provides a method for waking up a device. The method may be applied to a function on a network device side. A specific execution body of the method is not limited in this embodiment of this application. An example in which the method is applied to a network device is used. In the method, a network device receives a first message from a terminal device, where the first message has an association relationship with a service of the terminal device, and the first message is for waking up the network device; and the network device switches from a sleep state to an active state based on the first message.

In a possible implementation, the first message has an association relationship with at least one of the following information of the service: a service type, service quality of service, a service quality of service identifier, a service delay, a service rate, a service packet error rate, and service coverage.

In a possible implementation, the first message is associated with N service quality of service identifiers, the service quality of service identifier of the service is one of the N service quality of service identifiers, and N is an integer greater than 0.

In a possible implementation, the first message is associated with a service quality of service identifier range, and the service quality of service identifier of the service is in the service quality of service identifier range.

In a possible implementation, the first message is associated with M service types, the service type of the service is one of the M service types, and M is an integer greater than 0.

In a possible implementation, an association relationship between the first message and the service of the terminal device is preset.

In a possible implementation, an association relationship between the first message and the service of the terminal device is configured by the network device.

In a possible implementation, that the association relationship between the first message and the service of the terminal device is configured by the network device includes: The terminal device receives a system message or a radio resource control message from the network device, where the system message or the radio resource control message includes the association relationship.

In a possible implementation, the first message is a wakeup message; or the first message is a message 1 or a message A in a random access procedure.

In a possible implementation, the method further includes: The network device receives capability information from the terminal device, where the capability information indicates that the terminal device has a capability of sending a message that has an association relationship with the service of the terminal device and that is for waking up the network device.

In a possible implementation, the method further includes: The network device sends a second message to the terminal device, where the second message is for triggering the terminal device to report assistance information, and the assistance information includes at least one of the following information:
a service data amount that the terminal device expects to report, a sending interval of a service data packet that the terminal device expects to report, a size of a service data packet that the terminal device expects to report, and time of arrival of a service data packet that the terminal device expects to report.

In a possible implementation, the second message is a paging message; or the second message is a short message; or the second message is a system message; or the second message is a radio resource control message.

In a possible implementation, the service of the terminal device has an association relationship with at least one of the following information of the first message: a time domain resource, a frequency domain resource, a codeword, an orthogonal sequence, a sequence length, a sequence format, transmit power, and a power coefficient.

According to a third aspect, this application provides a communication method. The method may be applied to a function on a network device side. A specific execution body of the method is not limited in this embodiment of this application. An example in which the method is applied to a network device is used. In the method, a network device determines a second message, and sends the second message to a terminal device, where the second message is for triggering the terminal device to report assistance information.

In a possible implementation, the network device receives the assistance information, and determines, based on the assistance information, a sleep mode and/or sleep duration used when the network device enters a sleep state.

Based on the foregoing method, the network device may flexibly determine, based on the assistance information of the terminal device, the sleep mode and/or the sleep duration, to maximize energy saving without affecting terminal experience.

In a possible implementation, the assistance information includes at least one of the following information: a service data amount that the terminal device expects to report, a sending interval of a service data packet that the terminal device expects to report, a size of a service data packet that the terminal device expects to report, and time of arrival of a service data packet that the terminal device expects to report.

Based on the foregoing method, when the assistance information includes the foregoing information, the network device can determine that the terminal device expects a service amount in a future period of time, to determine whether to enter the sleep state. When the network device enters the sleep state, energy can be significantly reduced, and a service of the terminal device is not affected.

According to a fourth aspect, an embodiment of this application provides a communication apparatus. The communication apparatus has a function for implementing the first aspect. For example, the communication apparatus includes a module, a unit, or a means for performing steps in the first aspect, and the function, the unit, or the means may be implemented by software, or may be implemented by hardware, or may be implemented by hardware executing corresponding software.

In a possible implementation, the communication apparatus includes a processing unit and a communication unit. The communication unit may be configured to receive and send a signal, to implement communication between the communication apparatus and another apparatus. The processing unit may be configured to perform some internal operations of the communication apparatus.

In a possible implementation, the communication apparatus includes a processor, and may further include a transceiver. The transceiver is configured to receive and send a signal. The processor executes program instructions, to complete the method in any possible design or implementation in the first aspect. The communication apparatus may further include one or more memories. The memory is configured to be coupled to the processor, and the memory may store a computer program or instructions for implementing one or more functions in the first aspect. The processor may execute the computer program or the instructions stored in the memory. When the computer program or the instructions are executed, the communication apparatus is enabled to implement the method in any possible design or implementation in the first aspect.

In a possible implementation, the communication apparatus includes a processor, and the processor may be configured to be coupled to a memory. The memory may store a computer program or instructions necessary for implementing a function in the first aspect. The processor may execute the computer program or the instructions stored in the memory. When the computer program or the instructions are executed, the communication apparatus is enabled to implement the method in any possible design or implementation in the first aspect. Optionally, the communication apparatus further includes the memory. Optionally, the memory and the processor are integrated together. Optionally, the memory is located outside the communication apparatus.

In a possible implementation, the communication apparatus includes a processor and an interface circuit. The processor is configured to: communicate with another apparatus through the interface circuit, and perform the method in any possible design or implementation in the first aspect.

According to a fifth aspect, this application further provides a communication apparatus. The communication apparatus can implement any method or any implementation provided in the second aspect or the third aspect. The communication apparatus may be implemented by hardware, may be implemented by software, or may be implemented by hardware executing corresponding software. The hardware or the software includes one or more units or modules corresponding to the foregoing functions.

In a possible implementation, the communication apparatus includes a processing unit and a communication unit. The communication unit may be configured to receive and send a signal, to implement communication between the communication apparatus and another apparatus. The processing unit may be configured to perform some internal operations of the communication apparatus.

In a possible implementation, the communication apparatus includes a processor, and may further include a transceiver. The transceiver is configured to receive and send a signal. The processor executes program instructions, to complete the method in any possible design or implementation in the second aspect or the third aspect. The communication apparatus may further include one or more memories. The memory is configured to be coupled to the processor, and the memory may store a computer program or instructions for implementing one or more functions in the second aspect or the third aspect. The processor may execute the computer program or the instructions stored in the memory. When the computer program or the instructions are executed, the communication apparatus is enabled to implement the method in any possible design or implementation in the second aspect or the third aspect.

In a possible implementation, the communication apparatus includes a processor, and the processor may be configured to be coupled to a memory. The memory may store a computer program or instructions necessary for implementing a function in the second aspect or the third aspect. The processor may execute the computer program or the instructions stored in the memory. When the computer program or the instructions are executed, the communication apparatus is enabled to implement the method in any possible design or implementation in the second aspect or the third aspect. Optionally, the communication apparatus further includes the memory. Optionally, the memory and the processor are integrated together. Optionally, the memory is located outside the communication apparatus.

In a possible implementation, the communication apparatus includes a processor and an interface circuit. The processor is configured to: communicate with another apparatus through the interface circuit, and perform the method in any possible design or implementation in the second aspect or the third aspect.

According to a sixth aspect, an embodiment of this application provides a communication system. The communication system includes the terminal device provided in the fourth aspect and the network device provided in the fifth aspect.

According to a seventh aspect, a computer-readable storage medium is provided, and is configured to store a computer program. The computer program includes instructions for performing the method in the first aspect or any one of the possible implementations of the first aspect.

According to an eighth aspect, a computer-readable storage medium is provided, and is configured to store a computer program. The computer program includes instructions for performing the method in any possible implementation in the second aspect and the third aspect.

According to a ninth aspect, a computer program product is provided. The computer program product includes a computer program or instructions. When the computer program or the instructions are run on a computer, the computer is enabled to perform the method in the first aspect or any one of the possible implementations of the first aspect.

According to a tenth aspect, a computer program product is provided. The computer program product includes a computer program or instructions. When the computer program or the instructions are run on a computer, the computer is enabled to perform the method in any possible implementation in the second aspect and the third aspect.

According to an eleventh aspect, this application provides a chip. The chip includes a processor. The processor is coupled to a memory, and is configured to read and execute a software program stored in the memory, to implement the method in the first aspect or any one of the possible implementations of the first aspect.

According to a twelfth aspect, this application provides a chip. The chip includes a processor. The processor is coupled to a memory, and is configured to read and execute a software program stored in the memory, to implement the method in any one of the possible implementations in the second aspect and the third aspect.

These aspects or another aspect of this application is clearer and more comprehensible in descriptions of the following embodiments.

### BRIEF DESCRIPTION OF DRAWINGS

FIG. 1 is a diagram of a dual connectivity network architecture applicable to an embodiment of this application;
FIG. 2 is a diagram of a standalone network architecture applicable to an embodiment of this application;
FIG. 3 is a schematic flowchart of a method for waking up a device according to an embodiment of this application;
FIG. 4 is a schematic flowchart of a communication method according to an embodiment of this application;
FIG. 5 is a diagram of a structure of a communication apparatus according to an embodiment of this application; and
FIG. 6 is a diagram of a structure of a communication apparatus according to an embodiment of this application.

### DESCRIPTION OF EMBODIMENTS

The following describes embodiments of this application in detail with reference to accompanying drawings of this specification.

The technical solutions provided in this application may be applied to various communication systems, for example, may be applied to a 4th generation (4th generation, 4G) communication system, for example, LTE, or may be applied to a 5th generation (5th generation, 5G) communication system, for example, an NR system, or applied to various communication systems evolved after 5G, for example, a 6th generation (6th generation, 6G) communication system.

The method and the apparatus provided in embodiments of this application are based on a same technical concept or similar technical concepts. Because principles of resolving a problem by using the method and the apparatus are similar, mutual reference may be made to implementations of the apparatus and the method, and repeated parts are not described.

The terminal device mentioned in embodiments of this application may be a device that provides a user with voice and/or data connectivity, a mobile device with a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (providing a user with voice/data connectivity), for example, a handheld device or a vehicle-mounted device having a wireless connection function. Currently, some examples of the terminal device are as follows: a mobile phone (mobile phone), a satellite phone, a cellular phone, a tablet computer, a notebook computer, a palmtop computer, a mobile internet device (mobile internet device, MID), a customer-premises equipment (customer-premises equipment, CPE), an intelligent point of sale (point of sale, POS) terminal, a wearable device, an uncrewed aerial vehicle, a communication device carried on a high-altitude aircraft, a virtual reality (virtual reality, VR) device, an augmented reality (augmented reality, AR) device, a wireless terminal in industrial control (industrial control), a wireless terminal in vehicle-to-everything (vehicle-to-everything, V2X), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal of a communication system evolved after 5G, or the like. For example, the wireless terminal in the vehicle-to-everything may be a vehicle-mounted device, an entire vehicle device, a vehicle-mounted module, a vehicle, or the like. The wireless terminal in the industrial control may be a camera, a robot, or the like. The wireless terminal in the smart home may be a television, an air conditioner, a sweeper, a speaker, a set-top box, or the like.

The network device mentioned in embodiments of this application may be a device in a wireless network. For example, the network device may be a device that is deployed in a radio access network and that provides a wireless communication function for the terminal device. For example, the network device may be a radio access network (radio access network, RAN) node that connects the terminal device to the wireless network, and may also be referred to as an access network device. The network device in embodiments of this application may be an evolved NodeB (evolved NodeB, eNB) in a 4G system, may be a next generation NodeB (next generation NodeB, gNB) in a 5G system, or may be a base station in a 6G system, or a base station in another system evolved after 5G. Specifically, the network device includes but is not limited to: an evolved NodeB (evolved NodeB, eNB), a home NodeB (for example, a home evolved NodeB, or a home NodeB, HNB), a baseband unit (baseband unit, BBU), a wireless relay node, a wireless backhaul node, a transmission point (transmission point, TP), a transmission reception point (transmission reception point, TRP), one or a group of antenna panels (including a plurality of antenna panels) of a base station in a 5G mobile communication system. Alternatively, the network device may be a network node forming the gNB or the transmission point, for example, a BBU or a distributed unit (distributed unit, DU).

In some deployments, the gNB may include a central unit (central unit, CU) and a DU. The gNB may further include an active antenna unit (active antenna unit, AAU). The CU implements a part of functions of the gNB, and the DU implements a part of functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a MAC layer, and a physical (physical, PHY) layer. The AAU implements a part of physical layer processing functions, radio frequency processing, and a function related to an active antenna. Information at the RRC layer is finally changed to information at the PHY layer, or is changed from information at the PHY layer. Therefore, in this architecture, the higher layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified as a network device in a RAN, or the CU may be classified as a network device in a core network (core network, CN). This is not limited in this application.

This application is applicable to a dual connectivity (dual connectivity, DC) scenario or a standalone (standalone, SA) scenario. In the SA scenario, there may be an NR system standalone in 5G, or may be a 6G system standalone.

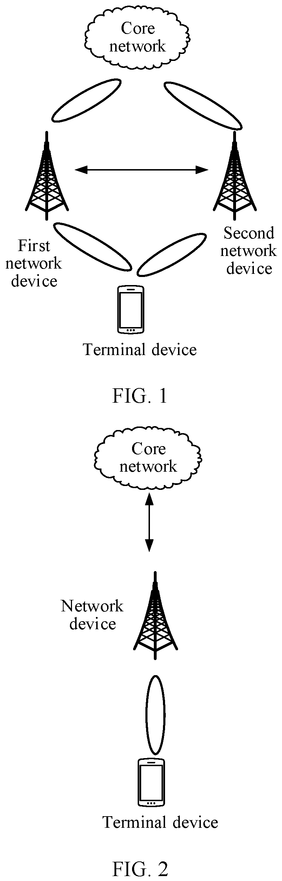

FIG. 1 is a diagram of a dual connectivity network architecture applicable to an embodiment of this application. In a dual connectivity scenario, a terminal device may be connected to two network devices with different standards or a same standard, and the two network devices may belong to a same core network. In FIG. 1, an example in which the terminal device establishes a connection to each of a first network device and a second network device is used. The first network device may be a network device in 4G, may be a network device in 5G, or may be a network device in 6G. Similarly, the second network device may be a network device in 4G, may be a network device in 5G, or may be a network device in 6G.

During actual application, when the terminal device establishes connections to both the network device in 5G and the network device in 4G, the network device in 5G may be used as a primary station, and the network device in 4G may be used as a secondary station. Alternatively, the network device in 4G may be used as a primary station, and the network device in 5G may be used as a secondary station. Similarly, when the terminal device establishes connections to both the network device in 5G and the network device in 6G, the network device in 5G may be used as a primary station, and the network device in 6G may be used as a secondary station. Alternatively, the network device in 6G may be used as a primary station, and the network device in 5G may be used as a secondary station. Other cases are deduced by analogy, and details are not described again.

FIG. 2 is a diagram of a standalone network architecture applicable to an embodiment of this application. In a standalone scenario, a terminal device is connected to one network device, and the network device connected to the terminal device and a core network connected to the network device are with a same standard. For example, if the core network is a 5G core network, the network device is a 5G network device. Alternatively, if the core network is a 6G core network, the network device is a 6G network device.

In this application, a network device may have at least two operating states: a sleep state and an active state. The sleep state may also be referred to as an inactive state. The active state may also be a state in which the network device operates normally. When the network device is in the active state, a transmitter and a receiver of the network device are in an operating state. Specifically, a radio frequency unit, an intermediate frequency unit, a baseband processing unit, and the like of the network device are all in a normal operating state. In this case, the network device may perform a downlink sending or an uplink receiving operation.

When the network device is in the sleep state, the network device sets the cell to the inactive state, and the transmitter and/or the receiver of the network device are/is in an off state. Specifically, the network device sets one or more of the radio frequency unit, the intermediate frequency unit, and the baseband processing unit to the off state. Correspondingly, the network device cannot send and/or receive a signal. Cell deactivation may alternatively be replaced with a similar term such as cell shutdown or sleep.

When a cell of the network device is activated/deactivated, the network device needs to exchange information with another network device through an interface between network devices. The interface between network devices may be an Xn/X2 interface or another interface that may appear in 6G. This is not limited in this application. FIG. 1 is used as an example. When a cell of the first network device is activated/deactivated, the first network device sends a node configuration update message to the second network device through an Xn interface, where the node configuration update message includes a cell activation/deactivation indication.

Currently, after deactivating the cell, the network device needs to reactivate the cell in a timing manner or activate the cell by using an adjacent network device, where an activation manner is simple, and cannot meet a requirement of a terminal device on a network. Therefore, this application provides a method, so that when receiving a message from the terminal device, the network device can be activated or switched to an active state. The following provides descriptions in detail.

In embodiments of this application, a plurality of means two or more than two. The term "and/or" describes an association relationship between associated objects and indicates that three relationships may exist. For example, A and/or B may represent the following three cases: Only A exists, both A and B exist, and only B exists. The character "/" generally indicates an "or" relationship between the associated objects. In addition, it should be understood that in the descriptions of this application, terms such as "first" and "second" are merely used for distinguishing and description, but should not be understood as indicating or implying relative importance, or should not be understood as indicating or implying a sequence.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

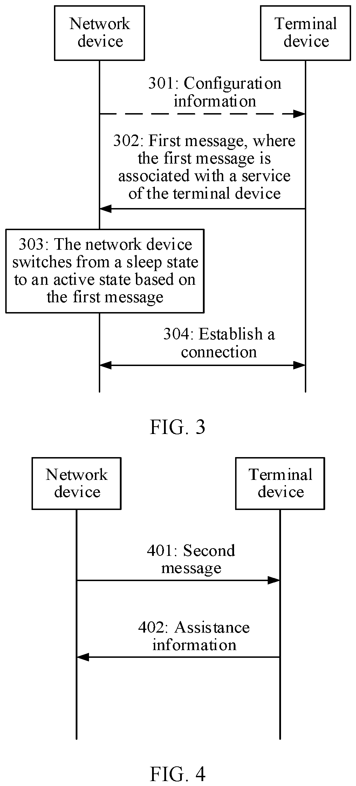

FIG. 3 is a schematic interaction diagram of a method for waking up a device according to an embodiment of this application. The method is described by using interaction between a terminal device and a network device as an example. The method includes the following steps.

S301: The network device sends configuration information of a first message to the terminal device, and correspondingly, the terminal device receives the configuration information of the first message.

S301 is an optional step. If the configuration information is agreed on in advance, the network device may not send the configuration information.

The configuration information may be for configuring at least one of the following information of the first message: attribute information of the first message, an association relationship between the first message and a service, and an association relationship between the first message and a startup mode of the network device.

In this application, the first message may further have another name, for example, an activation message or a power-on message. In a first implementation, the first message may be a wakeup message. To be specific, the first message is a message specially for waking up the network device, or a message for triggering the network device to enter an operating state.

In the first implementation, before accessing the network device, the terminal device wakes up the network device from a sleep state by sending the first message, so that the terminal device can access the network device by using a random access procedure.

In a second implementation, the first message may be a random access request message in the random access procedure. For example, the random access request message may be a message 1 or a message A. In a four-step random access procedure, a random access preamble (preamble) sent by the terminal device is referred to as the message 1. In a two-step random access procedure, the random access preamble (namely, the message 1) and a scheduling transmission message (namely, a message 3) in the original four-step random access procedure are combined into the message A.

In the second implementation, the message 1 or the message A in the random access procedure is used as the first message, so that the network device can be woken up and the network device can be accessed by using fewer messages, to increase a speed of accessing the network device by the terminal device.

In this application, the attribute information of the first message includes at least one of the following information: a time domain resource, a frequency domain resource, a codeword, an orthogonal sequence, a sequence length, a sequence format, transmit power, and a power coefficient.

The time domain resource is at least one of a sending periodicity, a radio frame, a subframe, a slot, and a symbol of the first message. The frequency domain resource may be at least one of a quantity of resource blocks, a resource block location, a subcarrier, a bandwidth part (bandwidth part, BWP), and a bandwidth of the first message. The codeword is an orthogonal code or a quasi-orthogonal code used by the first message. For example, the codeword may be an orthogonal cover code (orthogonal cover code, OCC). The orthogonal sequence is an orthogonal or quasi-orthogonal sequence used by the first message, for example, a ZadoffChu (ZC) sequence. The sequence length is a length of the orthogonal sequence used by the first message. The sequence format may be a format of a sequence included in the first message. For example, a plurality of sequence formats are predefined in a network, and different sequence formats have different sequence lengths and/or sequence repetition quantities. The transmit power may be transmit power at which the terminal device sends the first message. For the power coefficient, when sending the first message, the terminal device needs to multiply the power coefficient by the transmit power, to obtain actual transmit power when the first message is finally sent.

In this embodiment of this application, if attribute information of two first messages is different, the two first messages may be different types of messages. For example, if a frequency domain resource of one first message is different from a frequency domain resource of the other first message, the two first messages are different types of first messages. For another example, if a sequence format of one first message is different from a sequence format of the other first message, the two first messages are different types of first messages. To distinguish between different types of first messages, one of the first messages may be referred to as a first type of message, and the other first message may be referred to as a second type of message. Other cases may be deduced by analogy.

The association relationship between the first message and the service may mean that the attribute information of the first message has an association relationship with at least one of the following information of the service of the terminal device: a service type; service quality of service (quality of service, QoS); a service quality of service identifier, where the service quality of service identifier is for representing quality of service of the service; a service delay, where for example, the service delay may be a packet latency (packet delay), an end-to-end delay of a data packet, or an air interface delay of a data packet; a service rate; a service packet error rate (packet error rate); and service coverage.

In this application, different quality of service identifiers may correspond to different service delays and packet error rates. For example, a correspondence among a quality of service identifier, a service delay, and a packet error rate may be shown in Table 1.

**Table 1**

| Quality of service identifier | Service delay | Packet error rate |
|---|---|---|
| 1 | 100 ms | 10⁻² |
| 2 | 150 ms | 10⁻³ |
| 3 | 50 ms | 10⁻³ |
| 4 | 300 ms | 10⁻⁶ |

In this application, the association relationship between the first message and the service may alternatively be agreed on in advance. If the association relationship is agreed on in advance, the association relationship may not be configured by using the configuration information. Specific content of the association relationship between the first message and the service is described in detail in the following.

In this application, the network device may configure a plurality of different types of first messages, or a plurality of different types of first messages are agreed on in a protocol, where each different type of first message may be associated with a startup mode of one network device. For example, the startup mode of the network device may include a conventional startup mode, a quick startup mode, a full-bandwidth startup mode, a narrow-bandwidth startup mode, and the like. The conventional startup mode means that when the network device is started up and activated, the network device is started up based on to a normal startup process. For example, the normal startup process may include the following several steps: 1. Completion of initialization operations, including but not limited to initialization operations of a main control board and a board. 2. Board, transmission, and clock configuration operations. 3. Establishment of connections to network management and an upper-layer network element. 4. System consistency check, that is, calibration. 5. Parameter configuration, including configuring parameters such as a bandwidth size of a cell and a frequency of a cell. 6. Cell activation. The quick startup mode means that when the network device is started up and activated, a part of operations are not performed, for example, the initialization operations of the main control board and the board are skipped, and/or the system consistency check is skipped, to reduce startup time and enter an active/working state more quickly. The full-bandwidth startup mode means that when the network device is started up and activated, a full frequency band may be activated and the network device operates in the full frequency band. The narrow-bandwidth startup mode means that when the network device is started up and activated, a part of frequency bands may be activated, in other words, a narrow bandwidth is activated and the network device operates in the narrow bandwidth.

Optionally, in an implementation, before the network device sends the configuration information of the first message, the terminal device may send capability information to the network device, where the capability information indicates that the terminal device has a capability of sending a message that has an association relationship with the service of the terminal device and that is for waking up the network device.

If the configuration information does not include any one of the foregoing information, the information may be agreed on in advance or specified in a protocol, and the network device may not configure the information by using the configuration information. For example, the frequency domain resource of the first message is agreed on in advance; in this case, the frequency domain resource of the first message may not be configured in the configuration information. For another example, the sequence format of the first message is agreed on in advance, in this case, the sequence format of the first message may not be configured in the configuration information.

In this application, if first messages associated with two services are different, attribute information of the two first messages is different. In other words, the two first messages are different in at least one of the following: a time domain resource, a frequency domain resource, a codeword, an orthogonal sequence, a sequence length, a sequence format, transmit power, and a power coefficient.

For example, that time domain resources of the two first messages are different may mean that the two first messages are different in at least one of the following: a sending periodicity, a radio frame, a subframe, a slot, and a symbol. That frequency domain resources of the two first messages are different may mean that the two first messages are different in at least one of the following: a quantity of resource blocks, a resource block location, a subcarrier, a bandwidth part, and a bandwidth. The codeword is an orthogonal code or a quasi-orthogonal code. That codewords of the two first messages are different may mean that the two first messages may be generated by using different OCC sequences. That sequences of the two first messages are different may mean that the two first messages use different orthogonal or quasi-orthogonal sequences. For example, a first message is generated based on a ZC sequence, and sequences used by two first messages may be mutually orthogonal sequences generated based on a root sequence by using different cyclic shifts. That sequence lengths of the two first messages are different may mean that the two first messages include sequences of different lengths. That sequence formats of the two first messages are different may mean that the two first messages include sequences in different formats. For example, a first message is generated based on a ZC sequence, and sequence lengths included in two first messages are different, or quantities of sequence repetition times included in the two first messages are different. That transmit power of the two first messages is different may mean that transmit power configured by the network device for the two first messages is different. That power coefficients of the two first messages are different may mean that the network device configures different power coefficients for the two first messages. For example, a power coefficient of one first message is 1, and a power coefficient of the other first message is 0.8.

Further, if the network device configures the association relationship between the first message and the service for the terminal device, the network device may perform configuration in any one of the following manners.

Manner 1: The network device sends, to the terminal device by using a broadcast message, the configuration information including the association relationship between the first message and the service.

The broadcast message may be a system message. Further, the system message may be a message that specially indicates a configuration related to network energy saving. Alternatively, the system message may be an existing system message, for example, a system information block 1 (system information block 1, SIB 1).

Manner 2: The network device sends, to the terminal device by using a unicast message, the configuration information including the association relationship between the first message and the service.

The unicast message may be higher layer signaling. The higher layer signaling includes but is not limited to an RRC message and a media access control (media access control, MAC) control element (control element, CE). Alternatively, the unicast message may be physical layer signaling, for example, downlink control information (downlink control information, DCI).

Manner 3: The network device sends, to the terminal device by using a network device adjacent to the network device, the configuration information including the association relationship between the first message and the service.

The network device may send a message to the network device adjacent to the network device through a station-to-station interface. The message includes the configuration information. A specific name of the message is not limited. The station-to-station interface may be an Xn interface, an X2 interface, or an interface with another name defined in a 6G network. For example, in a first possible implementation, the network device sends a RAN node configuration update message to the network device adjacent to the network device through the station-to-station interface, where the RAN node configuration update message includes the configuration information.

In a second possible implementation, if the network device is to switch to a sleep state, the network device may send an off request message to the network device adjacent to the network device. In this case, the off request message may include the configuration information of the first message. Optionally, if the network device receives an off reject message of the network device adjacent to the network device, the network device may not switch to the sleep state.

The foregoing is listed merely as examples, and the network device may send the configuration information to the terminal device in another possible implementation.

After sending the configuration information, the network device may enter the sleep state. If the network device enters the sleep state, the terminal device may send the first message to the network device based on the configuration information, to wake up the network device. For details, refer to the following procedure.

S302: The terminal device sends the first message to the network device, and correspondingly, the network device receives the first message from the terminal device.

Before the terminal device sends the first message, the network device is in the sleep state, or a cell of the network device is a deactivated cell. Correspondingly, the first message is for waking up the network device, and the first message is associated with the service of the terminal device.

Optionally, in a possible implementation, when the terminal device has a service requirement, when any one of the following conditions is met, the terminal device wakes up the network device by sending the first message:
Condition 1: The terminal device detects no signal of the network device, for example, detects no broadcast signal and/or synchronization signal of the network device.
Condition 2: Received signal quality of the terminal device is lower than a threshold. Optionally, the threshold may be predefined, may be configured by a network device accessed by the terminal device, or may be determined by the terminal device.
Condition 3: An identifier of a cell currently accessed by the terminal device is different from an identifier of a cell of the network device that needs to be woken up.
Condition 4: A network device currently accessed by the terminal device does not meet a service requirement of the terminal device. For example, the service requirement of the terminal device is a high-rate high-broadband service, but the network device accessed by the terminal device can provide only low-rate transmission.

In this application, the terminal device may determine the corresponding first message based on at least one of the following information of the service: a service type, service quality of service, a service quality of service identifier, a service delay, a service rate, a service packet error rate, and service coverage.

In this application, the service type may include but is not limited to: an enhanced mobile broadband (enhanced mobile broadband, eMBB) service, an ultra-reliable and low-latency (ultra-high reliability and low-latency, URLLC) service, a massive machine-type communication (massive machine-type communication, mMTC) service, an uplink ultra-bandwidth service, a real-time broadband communication service, a harmonized communication and sensing service, and a V2X service, an AR service, and the like.

When a first message is associated with a service type of a service, one first message may be associated with one or more service types. Optionally, one service type may be associated with a plurality of different first messages. Correspondingly, the first message sent by the terminal device is the first message associated with the service type of the service of the terminal device.

For example, the plurality of different first messages are respectively a first type of message to a seventh type of message, and service types associated with the first messages may be shown in Table 2.

**Table 2**

| Service type | First message |
|---|---|
| eMBB service | First type of message |
| URLLC service | Second type of message |
| mMTC service | Third type of message |
| V2X service | Fourth type of message |
| Uplink ultra-broadband service and real-time broadband communication service | Fifth type of message |
| Harmonized communication and sensing service | Sixth type of message and seventh type of message |

Each of the eMBB service, the URLLC service, the mMTC service, and the V2X service is associated with one first message. The uplink ultra-broadband service and the real-time broadband communication service are associated with a same first message. The harmonized communication and sensing service is associated with two first messages.

With reference to Table 2, when the service type of the service of the terminal device is eMBB, the terminal device may send the first type of message. When the service type of the service of the terminal device is URLLC, the terminal device may send the second type of message.

When a first message is associated with a service quality of service identifier of the service, one first message may be associated with one or more service quality of service identifiers. The service quality of service identifier may be an identifier, such as a QoS class identifier (QoS class identifier, QCI), a 5G QoS identifier (5G QoS identifier, 5QI), or a 6G QoS identifier, that can represent quality of service.

In a possible implementation, one first message may be associated with one service quality of service identifier range, and the service quality of service identifier range may include one or more service quality of service identifiers. Correspondingly, the service quality of service identifier range associated with the first message sent by the terminal device to the network device includes the service quality of service identifier of the service of the terminal device.

For example, the service quality of service identifier is a 5QI, a plurality of first messages with different attribute information are respectively a first type of message and a second type of message, and service quality of service identifier ranges associated with the first type of message and the second type of message may be shown in Table 3.

**Table 3**

| Service quality of service identifier range | First message |
|---|---|
| Greater than or equal to 1 and less than or equal to 5 | First type of message |
| Greater than 6 and less than or equal to 10 | Second type of message |

With reference to Table 3, when the service quality of service identifier of the service is 3, the terminal device may send the first type of message. When the service quality of service identifier of the service is 8, the terminal device may send the second type of message.

In another possible implementation, one first message may be associated with N service quality of service identifiers, where N is an integer greater than 0. Correspondingly, the N service quality of service identifiers associated with the first message sent by the terminal device to the network device include the service quality of service identifier of the service of the terminal device. In other words, the service quality of service identifier of the service of the terminal device is one of the N service quality of service identifiers associated with the first message sent by the terminal device.

For example, the service quality of service identifier is a 5QI, a plurality of first messages with different attribute information are respectively a first type of message and a second type of message, and service quality of service identifier ranges associated with the first type of message and the second type of message may be shown in Table 4.

**Table 4**

| Service quality of service identifier | First message |
|---|---|
| 1, 3, 5, and 7 | First type of message |
| 2, 4, 6, and 8 | Second type of message |

With reference to Table 4, when the service quality of service identifier of the service is 3, the terminal device may send the first type of message. When the service quality of service identifier of the service is 8, the terminal device may send the second type of message.

When a first message is associated with a service rate of a service, in a possible implementation, one first message may be associated with one service rate range. Correspondingly, the service rate range associated with the first message sent by the terminal device to the network device includes the service rate of the service of the terminal device. In other words, the service rate of the service of the terminal device is one in the service rate range associated with the first message sent by the terminal device.

For example, a plurality of first messages with different attribute information are respectively a first type of message and a second type of message, and service rate ranges associated with the first type of message and the second type of message may be shown in Table 5.

**Table 5**

| Service rate range | First message |
|---|---|
| 0 Kbps to 100 Kbps | First type of message |
| 1 Kbps to 10 Mbps | Second type of message |

With reference to Table 5, when the service rate of the service is 50 Kbps, the terminal device may send the first type of message. When the service rate of the service is 2 Mbps, the terminal device may send the second type of message.

When a first message is associated with a service packet error rate of a service, in a possible implementation, one first message may be associated with one service packet error rate range. Correspondingly, the service packet error rate range associated with the first message sent by the terminal device to the network device includes the service packet error rate of the service of the terminal device. In other words, the service packet error rate of the service of the terminal device is one in the service packet error rate range associated with the first message sent by the terminal device.

For example, a plurality of first messages with different attribute information are respectively a first type of message and a second type of message, and service packet error rate ranges associated with the first type of message and the second type of message may be shown in Table 6.

**Table 6**

| Service packet error rate range | First message |
|---|---|
| 10⁻³ to 10⁻¹ | First type of message |
| 10⁻⁶ to 10⁻⁴ | Second type of message |

With reference to Table 6, when the service packet error rate of the service is 10⁻³, the terminal device may send the first type of message. When the service packet error rate of the service is 10⁻⁶, the terminal device may send the second type of message.

Different service coverage may correspond to different received signal quality. When a first message is associated with service coverage of a service, in a possible implementation, one first message may be associated with one received signal quality range. Correspondingly, a received signal quality range associated with the first message sent by the terminal device to the network device includes the received signal quality corresponding to the service coverage of the service of the terminal device. In other words, the received signal quality corresponding to the service coverage of the service of the terminal device is one in the received signal quality range associated with the first message sent by the terminal device.

For example, a plurality of first messages with different attribute information are respectively a first type of message and a second type of message, and received signal quality ranges associated with the first type of message and second type of message may be shown in Table 7.

**Table 7**

| Received signal quality range | First message |
|---|---|
| 10⁻³ dB to 10⁻¹ dB | First type of message |
| 10⁻⁶ dB to 10⁻⁴ dB | Second type of message |

With reference to Table 7, when the received signal quality of the service is 10⁻³ dB, the terminal device may send the first type of message. When the received signal quality of the service is 10⁻⁶ dB, the terminal device may send the second type of message.

When a first message is associated with a service delay of a service, in a possible implementation, one first message may be associated with one delay range. Correspondingly, a delay range associated with the first message sent by the terminal device to the network device includes a service delay of the service of the terminal device. In other words, the service delay of the service of the terminal device is one in the delay range associated with the first message sent by the terminal device.

For example, a plurality of first messages with different attribute information are respectively a first type of message and a second type of message, and delay ranges associated with the first type of message and the second type of message may be shown in Table 8.

**Table 8**

| Delay range | First message |
|---|---|
| 0 ms to 10 ms | First type of message |
| 11 ms to 100 ms | Second type of message |

With reference to Table 8, when the service delay of the service is 5 ms, the terminal device may send the first type of message. When the service delay of the service is 50 ms, the terminal device may send the second type of message.

In the foregoing examples, an example in which the first message is associated with one of the service type, the service quality of service identifier, the service delay, the service rate, the service packet error rate, and the service coverage of the service is used for description. The first message may alternatively be associated with a plurality of the foregoing information of the service. For example, a correspondence between the first message and the service delay and the packet error rate may be shown in Table 9.

**Table 9**

| Service delay | Packet error rate | First message |
|---|---|---|
| 100 ms | 10⁻² | First type of message |
| 300 ms | 10⁻⁶ | Second type of message |
| 500 ms | 10⁻⁴ | Third type of message |
| 500 ms | 10⁻⁶ | Fourth type of message |

With reference to Table 9, when the service delay of the service is 100 ms and the packet error rate is 10⁻², the terminal device may send the first type of message. When the service delay of the service is 500 ms and the packet error rate is 10⁻⁴, the terminal device may send the third type of message. Other cases are deduced by analogy, and details are not described again.

In this application, if the first message is the message 1 or the message A in the random access procedure, the association relationship that is between the first message and the service and that is indicated by the network device to the terminal device by using the system message may be as follows: One or more service quality of service identifiers are associated with one random access preamble set, and one random access preamble set includes one or more random access preambles. In this case, when sending the message 1 or the message A, the terminal device may select one random access preamble from the random access preamble set associated with the service quality of service identifier of the service.

In an example implementation, the system message is a SIB 1, and the network device defines a QoS-RequestConfig configuration in the SIB 1. In this case, one or more requested QoSs are associated with one preamble resource subset, and the terminal device performs random access by using a preamble in the resource subset, so that the network device can obtain a QoS requirement of a terminal.

An example configuration is shown as follows. In this example, QoS-RequestConfig is defined in the SIB1, and an association relationship between the service quality of service identifier and the random access preamble set is configured in QoS-RequestConfig. After receiving the SIB 1, the terminal device may determine, by using QoS-RequestConfig in the SIB 1, the random access preamble set associated with the service quality of service identifier.

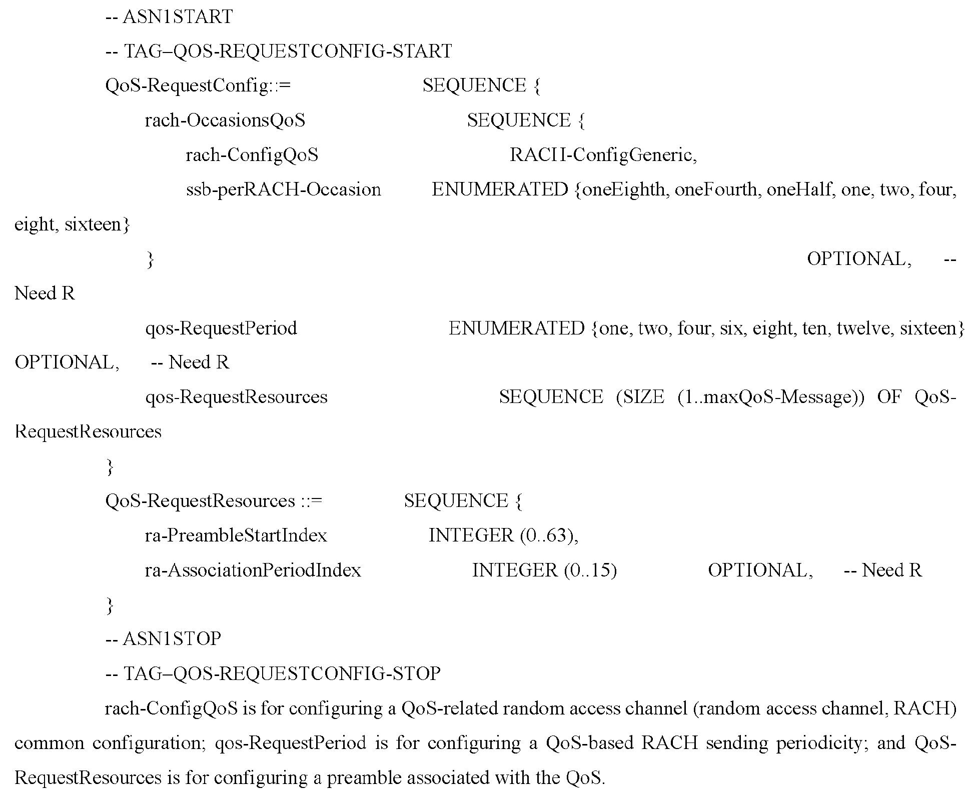

The foregoing is merely an example. The association relationship between the first message and the service may alternatively be in another form, and examples are not described one by one herein.

How a network side receives the first message is not specifically limited in this application, and one of the following manners may be used, or another manner may be used. This is not specifically limited herein.

Manner 1: There is an independent receiver and an ordinary receiver on a network device side, and the independent receiver is configured to receive the first message for waking up the network device. For example, the independent receiver may be a set of receivers of low power consumption. For the network device in a sleep state, when the first message for waking up the network device is received by using the independent receiver, the ordinary receiver is activated to operate.

Manner 2: There are a plurality of carriers on the network device side. When several of the carriers are shut down (or inactive), the terminal device may send, on a carrier that is not shut down (or active), the first message for waking up the network device. When receiving the first message, the network device wakes up or activates the carrier that is shut down.

Manner 3: The network device receives the first message by using an adjacent network device of the network device. For example, the terminal device sends the first message to the adjacent network device, and the adjacent network device may forward the first message to the network device through a station-to-station interface.

When the network device determines an active carrier, optionally, the network device may indicate an identifier of the active carrier to the terminal device. Alternatively, the first message may explicitly indicate (directly indicate) or implicitly (where the first message has a binding relationship with the carrier) indicate a carrier that needs to be activated, so that the network device activates a corresponding carrier. Optionally, the network device may not indicate the identifier of the active carrier, and the network device may determine, based on information about the service corresponding to the first message, the carrier that needs to be activated.

S303: The network device switches from a sleep state to an active state based on the first message.

In a possible implementation, the network device may determine, based on the association relationship between the first message and the service, at least one of the service type, the service quality of service identifier, the service delay, the service rate, the service packet error rate, and the service coverage of the service associated with the first message, to switch to the active state based on the at least one of the foregoing information.

For example, the network device determines, based on the first message, the service type associated with the first message, and determines, based on the service type, a startup speed when the network device switches to the active state. For example, the service type and a startup mode that are associated with the first message may be shown in Table 10.

**Table 10**

| Service type | First message | Startup mode |
|---|---|---|
| URLLC service | First type of message | Quick startup mode |
| eMBB service | Second type of message | Full-bandwidth startup mode |

With reference to Table 10, if the network device determines, based on the first message, that the service type is the URLLC service, the network device switches to the active state at a faster startup speed. For example, the network device may start up activation in the quick startup mode, and does not perform a part of operations, for example, skip an initialization operation, and/or skip a system consistency check, to reduce startup time and enter an activated/working state more quickly. If the network device determines, based on the first message, that the service type is the eMBB service, activation may be started up in the full-bandwidth startup mode, to meet a requirement of the eMBB service on the service rate.

For example, the network device determines, based on the first message, the service rate of the service associated with the first message, and determines, based on the service rate, a size of an operating bandwidth when the network device is switched to the active state. For example, when the network device determines, based on the first message, that the service rate is less than a rate threshold, the network device may activate a narrow bandwidth instead of a full frequency band. When the network device determines, based on the first message, that the service rate is greater than or equal to the rate threshold, the network device may activate a full frequency band. According to the method, the network device properly activates a network bandwidth, and this helps achieve network energy saving.

For example, the network device determines, based on the first message, that the service type of the service associated with the first message is an AR service. The AR service has both a low delay requirement and a high transmission rate requirement. Therefore, when the network device switches to the active state, a high-frequency cell may be enabled, because the high-frequency cell has a wider bandwidth and a shorter slot/symbol length, so that a low delay is better ensured.

In a possible implementation, the network device may determine, based on the association relationship between the first message and the startup mode of the network device, a startup mode associated with the first message, to switch to the active state based on a determined startup mode.

For example, startup modes associated with different types of first messages may be shown in Table 11.

**Table 11**

| | |
|---|---|
| First message | Startup mode |
| First type of message | Quick startup mode |
| Second type of message | Full-bandwidth startup mode |
| Third type of message | Narrow-bandwidth startup mode |

For example, with reference to Table 11, the first message received by the network device is the first type of message, and the network device determines that a startup mode associated with the first message of this type is the quick startup mode. When starting up activation, the network device does not perform a part of operations, for example, skip the initialization operation and/or skip the system consistency check, to reduce the startup time and enter the active/working state more quickly.

For example, with reference to Table 11, the first message received by the network device is the second type of message, and the network device determines that a startup mode associated with the first message of this type is the full-bandwidth startup mode. When starting up activation, the network device may activate a full frequency band, to operate in the full frequency band after startup.

For example, with reference to Table 11, the first message received by the network device is the third type of message, and the network device determines that a startup mode associated with the first message of this type is the narrow-bandwidth startup mode. When starting up activation, the network device may activate a part of frequency bands, to operate in a narrow and full frequency band after startup.

The foregoing are merely examples. There may be another implementation of how the network device specifically switches to the active state based on the first message. Examples are not described one by one herein.

Further, in this application, if the network device receives first messages of a plurality of terminal devices, the network device may switch to the active state based on a plurality of first messages, or may switch to the active state based on one of the first messages.

For example, a first message sent by the terminal device 1 is the first type of message, and a first message sent by the terminal device 2 is the second type of message. The service associated with the first type of message is the URLLC service, and the service associated with the second type of message is the eMBB service. The URLLC service has a high requirement on a delay, and the eMBB service has a high requirement on a service rate. Therefore, the network device may switch to the active state at a faster startup speed. For example, when starting up activation, the network device skips the initialization operation and/or skips a part of self-check processes, to reduce the startup time and meet the delay requirement of the URLLC service. Alternatively, when starting up activation, the network device may activate a full frequency band, in other words, operate in the full frequency band, to meet the service rate requirement of the eMBB service.

S304: The terminal device establishes a connection to the network device.

The terminal device may establish, through random access, an RRC connection to the network device.

In a possible implementation, after sending the first message, the terminal device starts up a timer. After the timer times out, the terminal device initiates random access to the network device, to establish the RRC connection to the network device. Optionally, timing duration of the timer may be predefined according to a standard. Alternatively, optionally, the network device configures the timing duration for the terminal, for example, configures the timing duration by using the configuration information in step 301.

In a possible implementation, after sending the first message, the terminal device detects a synchronization signal block (synchronization signal block, SSB), and initiates random access based on a detected synchronization signal.

In a possible implementation, when the first message sent by the terminal device is a random access request message, the terminal device receives, in a response receive window, the random access response message sent by the network device, to establish the RRC connection to the network device. Optionally, start time and duration of the response receive window may be predefined in a protocol or configured by the network device. Optionally, the start time and/or the duration of the response receive window may be obtained by adding an offset to start time and/or duration of a random access response (random access response, RAR) window (window) in a protocol.

After the RRC connection is established, service data may be transmitted between the terminal device and the network device. A specific process is not described.

In a possible implementation, in the scenario shown in FIG. 1, if the terminal device needs to activate a secondary network device (a network device corresponding to a secondary station), the terminal device may send a first message to a primary network device (a network device corresponding to a primary station). The primary network device may send an activation indication to the secondary network device based on the first message, to activate the secondary network device. After the secondary network device is activated, the primary network device may indicate, by using an RRC reconfiguration message, the terminal to add the secondary network device, so that the terminal further establishes a connection to the secondary network device.

According to the method provided in this application, the service of the terminal device is associated with the first message for waking up the network device. For example, different types of services are associated with different first messages. When the network device is in a sleep state, or downlink of the network device is disabled, when the network device receives the first message, the network device may determine, based on the first message, at least one of the service type, the service quality of service identifier, the service delay, the service rate, the service packet error rate, and the service coverage of the service associated with the network device, so that the network device may further determine whether to perform fast startup, whether to perform broadband transmission, or the like, to better improve user service experience and reduce energy consumption of a base station.

In this application, when the network device is in a normal operating state, and when there is no terminal device in a connected state, or a quantity of terminal devices in a connected state is less than a preset quantity, or a service amount of a terminal device is less than a preset threshold, or the foregoing cases are expected to occur in a future period of time under coverage of the network device, the network device may perform a shutdown operation to enter a sleep state, to reduce energy consumption. When the network device is in the sleep state, there are a plurality of sleep modes, and different sleep modes have different processing manners, recovery duration, and the like. Therefore, when performing energy saving shutdown processing, the network device may obtain a service expectation of the terminal device in advance, and then enter a corresponding sleep mode. The sleep mode may also be referred to as an energy saving mode or the like.

FIG. 4 is a schematic flowchart of a communication method according to an embodiment of this application. The method is described by using interaction between a terminal device and a network device as an example. The method includes the following steps.

S401: The network device sends a second message to the terminal device, and correspondingly, the terminal device receives the second message.

The second message is for triggering the terminal device to report assistance information, and the assistance information includes at least one of the following information:
a service data amount that the terminal device expects to report, a sending interval of a service data packet that the terminal device expects to report, a size of a service data packet that the terminal device expects to report, and time of arrival of a service data packet that the terminal device expects to report.

In a possible implementation, the second message is a paging (paging) message.

In this manner, the network device may trigger, by using indication information carried in the paging message, a terminal to report the assistance information.

In a possible implementation, the second message is a short message.

In this manner, the network device may define a type in a short message (short message) field, for triggering the terminal device to report the assistance information.

Optionally, the short message may be carried in the paging message, or may be directly indicated by using DCI.

For example, the short message field may be shown in Table 12.

**Table 12**

| Bit | Short message field |
|---|---|
| 1 | For notifying a part of system message changes |
| 2 | For notifying earthquake and tsunami warning system messages and/or a public warning system message |
| 3 | For notifying a terminal device to stop monitoring a paging message on a current paging occasion |
| 4 | For triggering a terminal device to report assistance information |
| 5 to 8 | Reserved bit |

In Table 12, the short message field includes eight bits, where bits 1 to 3 have corresponding indication functions. In this application, when the 4^{th} bit in the short message field is 0 or 1, the 4^{th} bit may be for triggering the terminal device to report the assistance information.

In a possible implementation, the second message is a system message.

The system message may be a SIB 1 or the like. For example, an information element may be defined in the SIB 1, to indicate whether to trigger the terminal device to report the assistance information. When expecting to trigger the terminal device to report the assistance information, the network device sends a corresponding system message.

In a possible implementation, the second message is a radio resource control message.

The foregoing is merely an example. Alternatively, the network device may indicate, in another manner, the terminal device to report the assistance information, for example, indicate, by using a MAC CE or by defining a related field in DCI, the terminal device to report the assistance information. Details are not described herein.

S402: The terminal device sends the assistance information to the network device, and correspondingly, the network device receives the assistance information.

The network device may determine, based on the assistance information, information such as at least one of a sleep mode and sleep duration used when the network device enters a sleep state. For example, the network device may include the following several sleep descriptions: a power amplifier (power amplifier, PA)-level sleep mode, where in this sleep mode, only a PA on a network device side is disabled, and correspondingly, recovery time of the network device is the fastest; an AAU-level sleep mode, where an AAU is shut down, a corresponding radio frequency, an intermediate frequency, and a part of baseband modules are disabled, and recovery time is long; a deep sleep mode, where a radio frequency, an intermediate frequency, and a baseband part are all disabled, and corresponding recovery time is the longest.

After determining the sleep mode and the sleep duration, the network device may correspondingly disable a corresponding module, and may automatically wake up after preset sleep duration. For example, the network device determines, based on the assistance information reported by the terminal, to enter the AAU-level sleep mode, and determines sleep time T. In this case, the network device may shut down an AAU (including a radio frequency module, an intermediate frequency module, and a part of baseband modules), and activate the AAU after the time T, or considering that time for activating the AAU is n, the AAU may be activated after time T-n.

It may be understood that the examples in FIG. 3 and FIG. 4 in embodiments of this application are merely intended to help a person skilled in the art understand embodiments of this application, but are not intended to limit embodiments of this application to specific scenarios in the examples. Definitely, a person skilled in the art can make various equivalent modifications or changes based on the examples in FIG. 3 and FIG. 4, and such modifications or changes also fall within the scope of embodiments of this application. The steps in FIG. 3 and FIG. 4 are merely examples for description. This is not strictly limited. In addition, sequence numbers of the foregoing processes do not mean execution sequences. The execution sequences of the processes should be determined based on functions and internal logic of the processes, and should not be construed as any limitation on implementation processes of embodiments of this application. Some optional features in embodiments of this application may be independent of other features in some scenarios, or may be combined with other features in some scenarios. This is not limited. The solutions in embodiments of this application may be properly combined for use, and explanations or descriptions of terms in embodiments may be mutually referenced or explained in embodiments. This is not limited. Various numeric sequence numbers in embodiments of this application do not mean execution sequences, but are merely for differentiation for ease of description, and therefore should not be construed as any limitation on implementation processes of embodiments of this application. Some message names such as the first message in embodiments of this application do not limit the protection scope of embodiments of this application.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

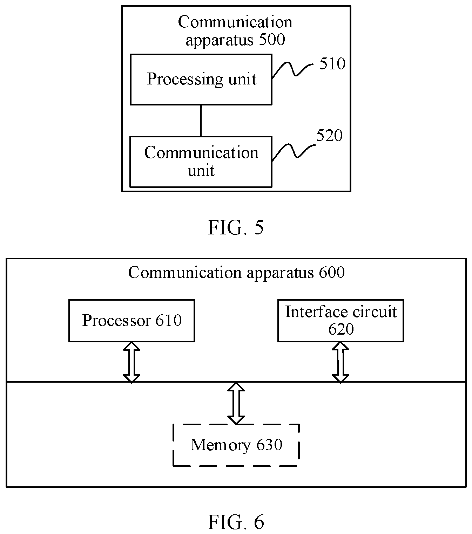

FIG. 5 is a schematic block diagram of a communication apparatus according to an embodiment of this application. The communication apparatus 500 includes a processing unit 510 and a communication unit 520. The communication unit 520 may implement a corresponding communication function, and the communication unit 520 may alternatively be a communication interface or a communication unit. The processing unit 510 may implement a corresponding processing function, for example, processing instructions and/or data.

In a possible implementation, the communication apparatus 500 may further include a storage unit. The storage unit may be configured to store the instructions and/or the data. The processing unit 510 may read the instructions and/or the data in the storage unit, to enable the apparatus to implement the foregoing method embodiments.

The communication apparatus 500 may be configured to perform actions performed by the terminal device or the network device in the foregoing method embodiments. In this case, the communication unit 520 in the communication apparatus 500 is configured to perform receiving and sending-related operations of the terminal device or the network device in the foregoing method embodiments, and the processing unit 510 is configured to perform processing-related operations of the terminal device or the network device in the foregoing method embodiments.

In a design, the communication apparatus 500 is configured to perform actions performed by the terminal device in the foregoing method embodiments: a communication unit, configured to send a first message to a network device, where the first message is associated with a service of the terminal device, and the first message is for waking up the network device; and a processing unit, configured to establish a connection to the network device.

In a possible implementation, the first message has an association relationship with at least one of the following information of the service: a service type, service quality of service, a service quality of service identifier, a service delay, a service rate, a service packet error rate, and service coverage.

In a possible implementation, the first message is associated with N service quality of service identifiers, the service quality of service identifier of the service is one of the N service quality of service identifiers, and N is an integer greater than 0.

In a possible implementation, the first message is associated with a service quality of service identifier range, and the service quality of service identifier of the service is in the service quality of service identifier range.

In a possible implementation, the first message is associated with M service types, the service type of the service is one of the M service types, and M is an integer greater than 0.

In a possible implementation, an association relationship between the first message and the service of the terminal device is preset.

In a possible implementation, an association relationship between the first message and the service of the terminal device is configured by the network device.

In a possible implementation, that the association relationship between the first message and the service of the terminal device is configured by the network device includes:

The communication unit receives a system message or a radio resource control message from the network device, where the system message or the radio resource control message includes the association relationship.

In a possible implementation, the first message is a wakeup message; or the first message is a message 1 or a message A in a random access procedure.

In a possible implementation, the communication unit is further configured to send capability information to the network device, where the capability information indicates that the terminal device has a capability of sending a message that has an association relationship with the service of the terminal device and that is for waking up the network device.

In a possible implementation, the communication unit is further configured to receive a second message from the network device, where the second message is for triggering the terminal device to report assistance information, and the assistance information includes at least one of the following information:
a service data amount that the terminal device expects to report, a sending interval of a service data packet that the terminal device expects to report, a size of a service data packet that the terminal device expects to report, and time of arrival of a service data packet that the terminal device expects to report.

In a possible implementation, the second message is a paging message; or the second message is a short message; or the second message is a system message; or the second message is a radio resource control message.

In a possible implementation, the service of the terminal device has an association relationship with at least one of the following information of the first message: a time domain resource, a frequency domain resource, a codeword, an orthogonal sequence, a sequence length, a sequence format, transmit power, and a power coefficient.

In a design, the communication apparatus 500 is configured to perform actions performed by the network device in the foregoing method embodiments: a communication unit, configured to receive a first message from a terminal device, where the first message has an association relationship with a service of the terminal device, and the first message is for waking up a network device; and a processing unit, configured to switch from a sleep state to an active state based on the first message.

In a possible implementation, the first message has an association relationship with at least one of the following information of the service:
a service type, service quality of service, a service quality of service identifier, a service delay, a service rate, a service packet error rate, and service coverage.

In a possible implementation, the first message is associated with N service quality of service identifiers, the service quality of service identifier of the service is one of the N service quality of service identifiers, and N is an integer greater than 0.

In a possible implementation, the first message is associated with a service quality of service identifier range, and the service quality of service identifier of the service is in the service quality of service identifier range.

In a possible implementation, the first message is associated with M service types, the service type of the service is one of the M service types, and M is an integer greater than 0.

In a possible implementation, an association relationship between the first message and the service of the terminal device is preset.

In a possible implementation, an association relationship between the first message and the service of the terminal device is configured by the network device.

In a possible implementation, the network device sends a system message or a radio resource control message to the terminal device, where the system message or the radio resource control message includes the association relationship.

In a possible implementation, the first message is a wakeup message; or the first message is a message 1 or a message A in a random access procedure.

In a possible implementation, the communication unit is further configured to receive capability information from the terminal device, where the capability information indicates that the terminal device has a capability of sending a message that has an association relationship with the service of the terminal device and that is for waking up the network device.

In a possible implementation, the communication unit is further configured to send a second message to the terminal device, where the second message is for triggering the terminal device to report assistance information, and the assistance information includes at least one of the following information: a service data amount that the terminal device expects to report, a sending interval of a service data packet that the terminal device expects to report, a size of a service data packet that the terminal device expects to report, and time of arrival of a service data packet that the terminal device expects to report.

In a possible implementation, the second message is a paging message; or the second message is a short message; or the second message is a system message; or the second message is a radio resource control message.

In a possible implementation, the service of the terminal device has an association relationship with at least one of the following information of the first message: a time domain resource, a frequency domain resource, a codeword, an orthogonal sequence, a sequence length, a sequence format, transmit power, and a power coefficient.

In a design, the communication apparatus 500 is configured to perform actions performed by the network device in the foregoing method embodiments:
a processing unit, configured to determine a second message; and
a communication unit, configured to send the second message to a terminal device, where the second message is for triggering the terminal device to report assistance information.

In a possible implementation, the communication unit is further configured to receive assistance information.

The processing unit is further configured to determine, based on the assistance information, a sleep mode and/or sleep duration used when the processing unit enters a sleep state.

In a possible implementation, the assistance information includes at least one of the following information: a service data amount that the terminal device expects to report, a sending interval of a service data packet that the terminal device expects to report, a size of a service data packet that the terminal device expects to report, and time of arrival of a service data packet that the terminal device expects to report.

The foregoing is merely an example. The processing unit 510 and the communication unit 520 may further perform other functions. For more detailed descriptions, refer to related descriptions in the method embodiments shown in FIG. 3 and FIG. 4. Details are not described herein again.

FIG. 6 is a communication apparatus according to an embodiment of this application. The communication apparatus shown in FIG. 6 may be an implementation of a hardware circuit of the communication apparatus shown in FIG. 5. The communication apparatus is applicable to the foregoing flowcharts, and performs the functions of the terminal device or the network device in the foregoing method embodiments. For ease of description, FIG. 6 shows only main components of the communication apparatus.

As shown in FIG. 6, a communication apparatus 600 includes a processor 610 and an interface circuit 620. The processor 610 and the interface circuit 620 are coupled to each other. It may be understood that the interface circuit 620 may be a transceiver, a pin, or an input/output interface. Optionally, the communication apparatus 600 may further include a memory 630, configured to: store instructions executed by the processor 610, store input data required by the processor 610 to run the instructions, or store data generated after the processor 610 runs the instructions. Optionally, a part or all of the memory 630 may be located in the processor 610, in other words, the memory 630 may be integrated with the processor 610.

When the communication apparatus 600 is configured to implement the methods shown in FIG. 3 and FIG. 4, the processor 610 is configured to implement the functions of the processing unit 510, and the interface circuit 620 is configured to implement the functions of the communication unit 520.

It may be understood that the processor in embodiments of this application may be a central processing unit, or may be another general-purpose processor, a digital signal processor, an application-specific integrated circuit, a logic circuit or another programmable logic device, a transistor logic device, a hardware component, or any combination thereof. The general-purpose processor may be a microprocessor or any regular processor or the like.

The memory in embodiments of this application may be a random access memory, a flash memory, a read-only memory, a programmable read-only memory, an erasable programmable read-only memory, an electrically erasable programmable read-only memory, a register, a hard disk drive, a removable hard disk drive, or any other form of a storage medium well-known in the art.

It should be noted that, when the processor is a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or discrete hardware component, the memory (storage module) may be integrated into the processor.

It should be further noted that the memory described in this specification is intended to include, but is not limited to, these memories and any other suitable type of memory.

An embodiment of this application further provides a computer-readable storage medium. The computer-readable storage medium stores a computer program or instructions. The computer program or the instructions are executed by a computer (for example, a processor), to implement a part or all of steps of any method performed by any apparatus in embodiments of this application.

An embodiment of this application further provides a computer program product including a computer program or a group of instructions. When the computer program product runs on a computer, a part or all of steps of any method in the foregoing aspects are performed.

This application further provides a chip or a chip system. The chip may include a processor. The chip may further include a memory (or a storage module) and/or a transceiver (or a communication module), or the chip is coupled to a memory (or a storage module) and/or a transceiver (or a communication module). The transceiver (or the communication module) may be configured to support the chip in performing wired and/or wireless communication. The memory (or the storage module) may be configured to store a program or a group of instructions. The processor may invoke the program or the group of instructions to implement operations performed by the terminal or the network device in any one of the foregoing method embodiments or the possible implementations of the method embodiments. The chip system may include the chip, or may include the chip and another discrete device, such as the memory (or the storage module) and/or the transceiver (or the communication module).

A person skilled in the art should understand that embodiments of this application may be provided as a method, a system, or a computer program product. Therefore, this application may use a form of hardware-only embodiments, software-only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to operate in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A method for waking up a device, comprising:
sending, by a terminal device, a first message to a network device, wherein the first message is associated with a service of the terminal device, and the first message is for waking up the network device; and
establishing, by the terminal device, a connection to the network device.

2. The method according to claim 1, wherein the first message has an association relationship with at least one of the following information of the service:
a service type, service quality of service, a service quality of service identifier, a service delay, a service rate, a service packet error rate, and service coverage.

3. The method according to claim 2, wherein the first message is associated with N service quality of service identifiers, the service quality of service identifier of the service is one of the N service quality of service identifiers, and N is an integer greater than 0.

4. The method according to claim 2, wherein the first message is associated with a service quality of service identifier range, and the service quality of service identifier of the service is in the service quality of service identifier range.

5. The method according to any one of claims 2 to 4, wherein
the first message is associated with M service types, the service type of the service is one of the M service types, and M is an integer greater than 0.

6. The method according to any one of claims 1 to 5, wherein
an association relationship between the first message and the service of the terminal device is preset; or
an association relationship between the first message and the service of the terminal device is configured by the network device.

7. The method according to claim 6, wherein
the terminal device receives a system message or a radio resource control message from the network device, wherein the system message or the radio resource control message comprises the association relationship.

8. The method according to any one of claims 1 to 7, wherein the first message is a wakeup message; or
the first message is a message 1 or a message A in a random access procedure.

9. The method according to any one of claims 1 to 8, wherein the method further comprises:
sending, by the terminal device, capability information to the network device, wherein the capability information indicates that the terminal device has a capability of sending a message that has an association relationship with the service of the terminal device and that is for waking up the network device.

10. The method according to any one of claims 1 to 9, wherein the method further comprises:
receiving, by the terminal device, a second message from the network device, wherein the second message is for triggering the terminal device to report assistance information, and the assistance information comprises at least one of the following information:
a service data amount that the terminal device expects to report, a sending interval of a service data packet that the terminal device expects to report, a size of a service data packet that the terminal device expects to report, and time of arrival of a service data packet that the terminal device expects to report.

11. The method according to claim 10, wherein the second message is a paging message; or
the second message is a short message; or
the second message is a system message; or
the second message is a radio resource control message.

12. The method according to any one of claims 1 to 11, wherein the service of the terminal device has an association relationship with at least one of the following information of the first message:
a time domain resource, a frequency domain resource, a codeword, an orthogonal sequence, a sequence length, a sequence format, transmit power, and a power coefficient.

13. A method for waking up a device, comprising:
receiving, by a network device, a first message from a terminal device, wherein the first message has an association relationship with a service of the terminal device, and the first message is for waking up the network device; and
switching, by the network device, from a sleep state to an active state based on the first message.

14. The method according to claim 13, wherein the first message has an association relationship with at least one of the following information of the service:
a service type, service quality of service, a service quality of service identifier, a service delay, a service rate, a service packet error rate, and service coverage.

15. The method according to claim 14, wherein the first message is associated with N service quality of service identifiers, the service quality of service identifier of the service is one of the N service quality of service identifiers, and N is an integer greater than 0.

16. The method according to claim 14, wherein the first message is associated with a service quality of service identifier range, and the service quality of service identifier of the service is in the service quality of service identifier range.

17. The method according to claim 14, wherein the first message is associated with M service types, a service type of the service is one of the M service types, and M is an integer greater than 0.

18. The method according to any one of claims 14 to 17, wherein the association relationship between the first message and the service of the terminal device is preset; or
the association relationship between the first message and the service of the terminal device is configured by the network device.

19. The method according to claim 18, wherein the network device sends a system message or a radio resource control message to the terminal device, and the system message or the radio resource control message comprises the association relationship.

20. The method according to any one of claims 13 to 19, wherein the first message is a wakeup message; or
the first message is a message 1 or a message A in a random access procedure.

21. The method according to any one of claims 13 to 20, wherein the method further comprises:
receiving, by the network device, capability information from the terminal device, wherein the capability information indicates that the terminal device has a capability of sending a message that has an association relationship with the service of the terminal device and that is for waking up the network device.

22. The method according to any one of claims 13 to 21, wherein the method further comprises:
sending, by the network device, a second message to the terminal device, wherein the second message is for triggering the terminal device to report assistance information, and the assistance information comprises at least one of the following information:
a service data amount that the terminal device expects to report, a sending interval of a service data packet that the terminal device expects to report, a size of a service data packet that the terminal device expects to report, and time of arrival of a service data packet that the terminal device expects to report.

23. The method according to claim 22, wherein the second message is a paging message; or
the second message is a short message; or
the second message is a system message; or
the second message is a radio resource control message.

24. The method according to any one of claims 13 to 23, wherein that the first message is associated with the service of the terminal device comprises:
the service of the terminal device has an association relationship with at least one of the following information of the first message:
a time domain resource, a frequency domain resource, a codeword, an orthogonal sequence, a sequence length, a sequence format, transmit power, and a power coefficient.

25. A method for waking up a device, comprising:
determining, by a network device, a second message; and
sending, by the network device, the second message to a terminal device, wherein the second message is for triggering the terminal device to report assistance information.

26. The method according to claim 25, wherein the method further comprises:
receiving, by the network device, the assistance information, and determining, based on the assistance information, a sleep mode and/or sleep duration used when the network device enters a sleep state.

27. The method according to claim 25 or 26, wherein the assistance information comprises at least one of the following information: a service data amount that the terminal device expects to report, a sending interval of a service data packet that the terminal device expects to report, a size of a service data packet that the terminal device expects to report, and time of arrival of a service data packet that the terminal device expects to report.

28. A communication apparatus, comprising:
a communication unit, configured to send a first message to a network device, wherein the first message is associated with a service of a terminal device, and the first message is for waking up the network device; and
a processing unit, configured to establish a connection to the network device.

29. A communication apparatus, comprising:
a communication unit, configured to receive a first message from a terminal device, wherein the first message has an association relationship with a service of the terminal device, and the first message is for waking up a network device; and
a processing unit, configured to switch from a sleep state to an active state based on the first message.

30. A communication apparatus, comprising:
a processing unit, configured to determine a second message; and
a communication unit, configured to send the second message to a terminal device, wherein the second message is for triggering the terminal device to report assistance information.

31. A communication apparatus, comprising a module or unit configured to implement the method according to any one of claims 1 to 12.

32. A communication apparatus, comprising a module or unit configured to implement the method according to any one of claims 13 to 27.

33. A communication apparatus, comprising a processor, wherein the processor is coupled to a memory; and
the processor is configured to execute a computer program or instructions stored in the memory, to enable the communication apparatus to implement the method according to any one of claims 1 to 12, or implement the method according to any one of claims 13 to 27.

34. The apparatus according to claim 33, comprising the memory.

35. A computer-readable storage medium, storing a computer program or instructions, wherein when the computer program or the instructions are run on a computer, the method according to any one of claims 1 to 27 is performed.

36. A computer program product, comprising instructions, wherein when the instructions are run on a computer, the method according to any one of claims 1 to 27 is performed.

37. A communication system, comprising a terminal device and a network device, wherein
the terminal device is configured to implement the method according to any one of claims 1 to 12; and
the network device is configured to implement the method according to any one of claims 13 to 24.
